## Europäisches Patentamt

## European Patent Office

## Office européen des brevets

(11) Veröffentlichungsnummer: **0 247 534**
**A2**

(12) **EUROPÄISCHE PATENTANMELDUNG**

(21) Anmeldenummer: **87107461.3**

(22) Anmeldetag: **22.05.87**

(51) Int. Cl.4: **F16L 37/26**

(30) Priorität: **27.05.86 DE 3617822**

(43) Veröffentlichungstag der Anmeldung:
**02.12.87 Patentblatt 87/49**

(84) Benannte Vertragsstaaten:
**DE FR GB IT NL**

(71) Anmelder: **HONEYWELL B.V.**
**Rijswijkstraat 175**
**NL-1062 EV Amsterdam(NL)**

(72) Erfinder: **Berkhof, Hendrikus**
**Stuwwal 7**
**Emmen(NL)**

(74) Vertreter: **Rentzsch, Heinz et al**
**Honeywell Europe S.A. Holding KG Patent-**
**und Lizenzabteilung Kaiserleistrasse 55**
**D-6050 Offenbach am Main(DE)**

(54) **Gasgeräte-Schnellanschluss.**

(57) Zum Schnellanschluß von mit einem Flansch versehenen Rohrenden an ein Gasgerät ist das Gasgerät (1) mit einem Ansatz (2) versehen, der auf wenigstens einer Mantelseite (4) zum seitlichen Einführen des Flansches (5) offen ist. Der Ansatz (2) hat einen nach innen weisenden Kragen (3), an dem sich eine durch die seitliche Öffnung in den Ansatz einführbare und auf dem Außengewinde eines das Rohrende umgebenden Gewinderings (10) verschraubbare Mutter (11) in Achsrichtung abstützt. Durch geeignete Ausbildung der Außenkontur der Mutter (11) und der Innenkontur des Ansatzes (2) ist ein Mitdrehen der Mutter beim Drehen des Gewinderings (10) vermieden.

FIG. 1

EP 0 247 534 A2

## Gasgeräte-Schnellanschluß

Die Erfindung betrifft einen Gasgeräte-Schnellanschluß gemäß Gattungsbegriff des Anspruchs 1. Aus Fig. 5 der DE-PS 11 89 815 ist eine Anschlußvorrichtung dieser Art bekannt, bei welcher ein muffenförmiger Ansatz mit einem Innengewinde versehen ist, in welches nach dem Einsetzen des Rohrflansches ein längsgeteilter Gewindering eingeschraubt und durch in seine Teilfugen eingesetzte keilförmige Füllstücke im Gewinde verspannt wird. Dabei erfolgt das Zusammenfügen von Rohrenden und Muffe nach Art einer Schrumpfmuffenverbindung bei entweder erwärmter Muffer oder unterkühltem Rohrende. Eine solche Verbindung ist als schnell lösbarer und wieder anschließbarer Rohranschluß für Gasgeräte ungeeignet.

Beim Einsatz von Gasgeräten, insbesondere Gasregelgeräten, Druckreglern, Temperaturreglern und dergl. ist von Zeit zu Zeit aus Wartungsgründen oder um die erforderlichen Sicherheitsüberprüfungen am betreffenden Gerät durchführen zu können, ein Ausbau des Gasgeräts aus dem Rohrleitungsstrang erwünscht, wobei einerseits der Zeitaufwand für einen solchen Ausbau und Wiedereinbau möglichst gering sein soll und andererseits ein gasdichter Anschluß des Rohrendes an das Gasgerät gewährleistet sein muß. Aufgabe der Erfindung ist es, einen diese Forderungen erfüllenden Gasgeräte-Schnellanschluß zu - schaffen. Diese Aufgabe wird gelöst durch die im Anspruch 1 gekennzeichnete Erfindung.

Sie ermöglicht es, nach dem Lösen des Gewinderings das Gasgerät vom Rohrendflansch senkrecht zur Rohrachse abzuziehen bzw. das Rohrende mit seinem Flansch aus dem taschenförmigen Ansatz des Gasgerätes herauszuziehen. Damit ist eine schnelle Demontage und später ein schneller Zusammenbau möglich. Im ausgebauten Zustand kann das Gasgerät überprüft bzw. die Rohrleitung ebenfalls überprüft und gesäubert werden. Vorteilhafte Ausgestaltungen ergeben sich aus den Unteransprüchen. Die Erfindung wird nachfolgend anhand eines in den Zeichnungen wiedergegebenen Ausführungsbeispiels erläutert. Dabei zeigt

Fig. 1 einen axialen Schnitt durch das Rohrende und die Anschlußvorrichtung;

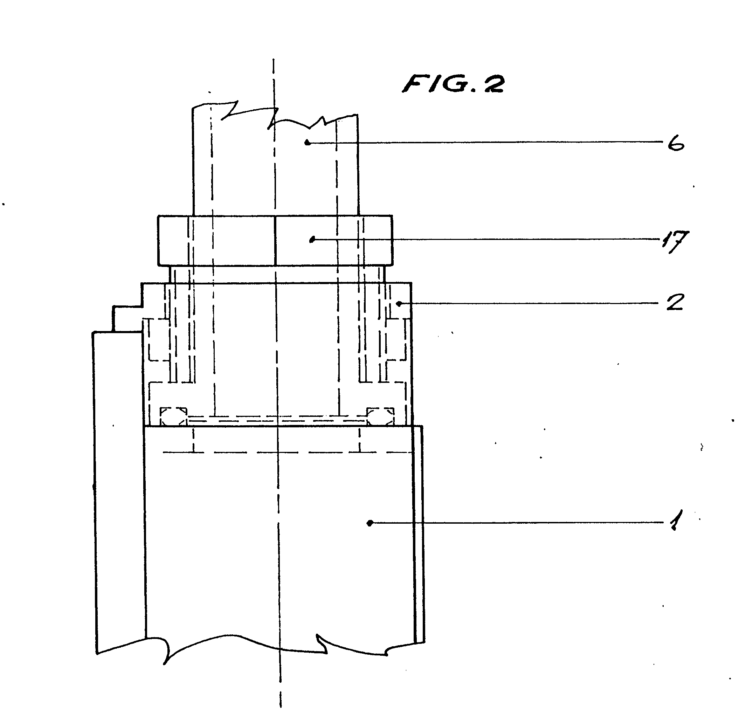

Fig. 2 eine Teilansicht eines Gasregelgerätes mit angesetztem Anschlußrohr;

Fig. 3 eine perspektivische Darstellung des Gasregelgerätes mit Schnellanschluß in zusammengebautem Zustand;

Fig. 4A eine Draufsicht auf eine Mutter mit quadratischer Außenkontur und

Fig. 4B die seitliche Ansicht hiervon.

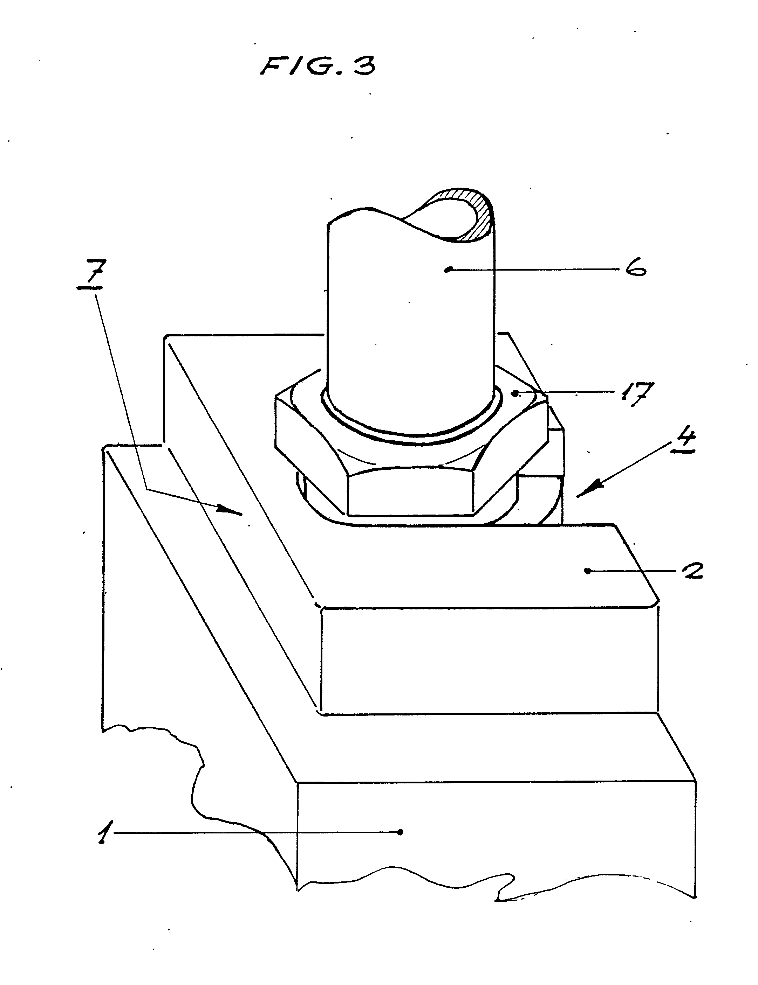

Das Gehäuse 1 eines Gasregelgeräts oder sein Deckel ist mit einem Ansatz 2 ausgestattet, der auf wenigstens zwei sich gegenüberliegenden Seiten einen nach innen weisenden Kragen 3 aufweist. Der Ansatz 2 ist wie Fig. 3 zeigt, auf wenigstens einer Seite 4 offen, damit der Flansch 5 am Ende des Anschlußrohres 6 von dieser Seite her in den Ansatz 2 eingeführt werden kann. Statt dessen kann der Ansatz 2 auch auf zwei gegenüberliegenden Seiten, also auf den Seiten 4 und 7 offen sein. Die einseitige Öffnung bietet den Vorteil, daß der Flansch 5 auf einfache Weise gegenüber der Anschlußöffnung 8 des Gehäuses 1 ausgerichtet werden kann.

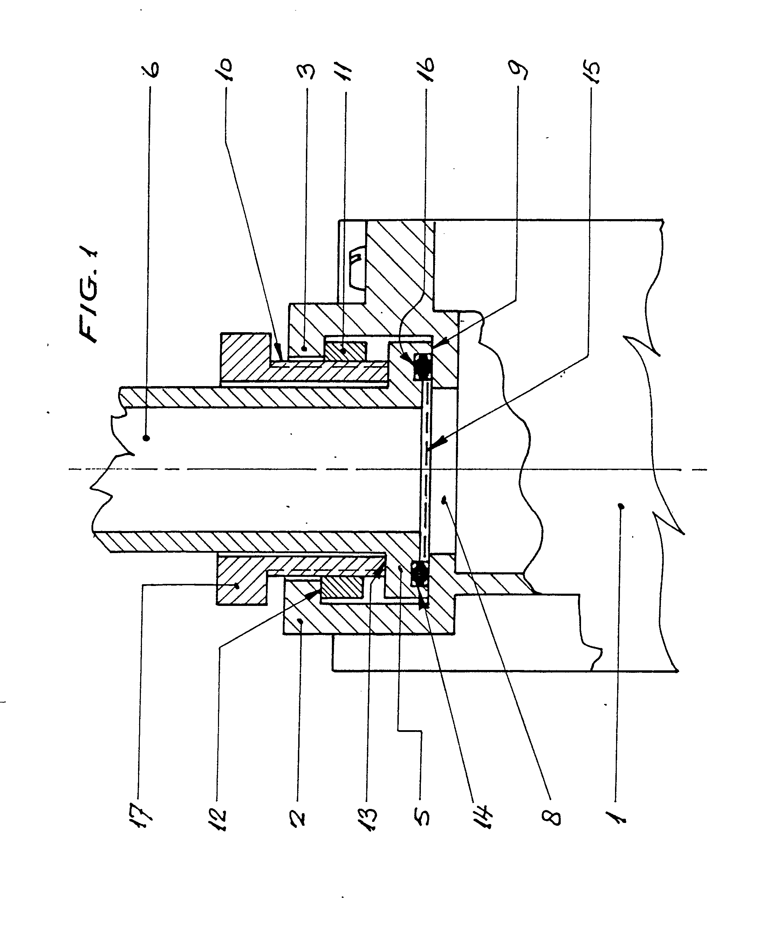

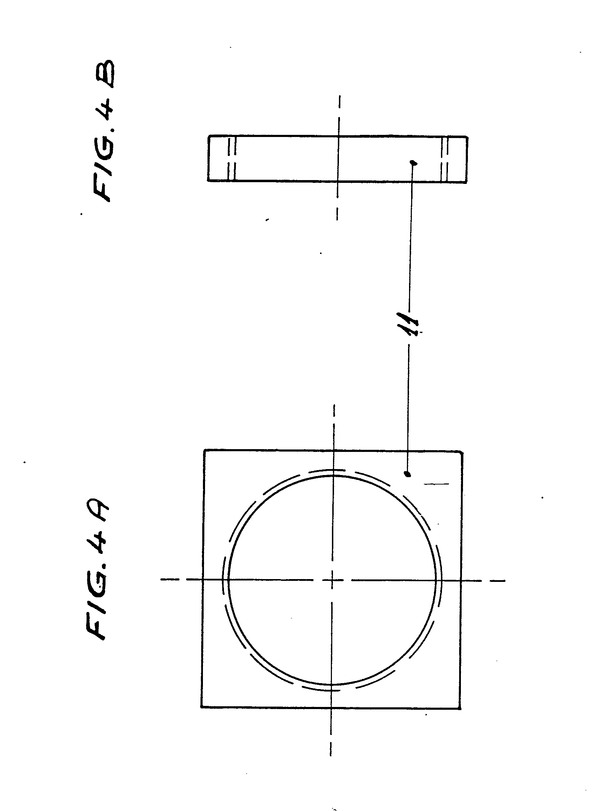

Zum Festspannen des Flansches 5 und damit des Rohres 6 gegen die die Anschlußöffnung 8 umgebende Bodenfläche 9 des Ansatzes 2 dient der Gewindering 10 in Verbindung mit der Mutter 11. Der Gewindering 10 wird zusammen mit der auf sein Außengewinde aufgeschraubten Mutter 11 vor dem Zusammenbau auf das Ende des Rohres 6 geschoben und die Mutter 11 soweit zum Ende des Gewinderings 10 geschraubt, daß dieser zusammen mit dem Flansch 5 wie oben erwähnt seitlich in die Öffnung 4 des Ansatzes 2 eingeschoben werden kann. Die Mutter 11 hat wie Fig. 4 zeigt, eine von der Kreisform abweichende, vorzugsweise quadratische Außenkontur und der Innenraum des Ansatzes 2 hat eine dieser Außenkontur der Mutter derart angepaßte Innenkontur, daß beim Drehen des Gewinderings 10 die Mutter 11 nicht mitgedreht werden kann. Somit wird beim Drehen des Gewinderings 10 die Mutter 11 vom Ende in Richtung auf die aus Fig. 1 ersichtliche Lage verschraubt und legt sich gegen die untere Stirnfläche 12 des Innenkragens 3 des Ansatzes 2 und stützt sich dort ab. Mit ihrer Stirnfläche 13 drückt die Mutter 10 gegen den Flansch 5 und damit diesen und das Rohr 6 gegen die Bodenfläche 9 des Ansatzes. Zwischen Bodenfläche 9 und Flansch 5 ist als Abdichtung ein O-Ring 14 eingespannt, der zusammen mit einem Schmutzsieb 15 als einstückiges Bauteil ausgebildet sein kann. In Fig. 1 befindet sich der O-Ring in einer Ringnut 16 in der unteren Stirnfläche des Flansches 5. Statt dessen kann er auch in eine entsprechende Nut in der Bodenfläche 9 teilweise eingelegt und auf diese Weise zentriert sein.

Zum Drehen des Gewinderings 10 ist im gezeigten Ausführungsbeispiel dessen äußeres Ende mit einem Sechskantansatz 17 versehen. Statt dessen kann der Gewindering auch als glattes Rohr mit seitlichen Abflachungen zum Ansetzen eines Werkzeuges, z. B. eines Maulschlüssels oder mit radialen Schlitzen in seiner äußeren Stirnfläche zum Ansetzen eines klauenförmigen Werkzeuges ausgestattet sein. Anstelle einer quadratischen Außenkontur der Mutter 11 kann auch eine beliebige andere mit einer entsprechenden Innenkontur des Ansatzes 2 zusammenwirkende unrunde Kontur dienen, welche ein Mitdrehen der Mutter 11 beim Drehen des Gewinderings 10 verhindert. Anstelle eines O-Rings an der Stirnseite des Flansches 5 können auch ein O-Ring oder andere Dichtungsmittel an einer Mantelfläche des Flansches vorgesehen sein. Die Anordnung der Dichtelemente an der Stirnfläche ist jedoch wegen der gleichzeitigen Einspannung dieser Dichtung beim Festschrauben des Flansches vorzuziehen.

**Ansprüche**

1. Gasgeräte-Schnellanschluß für Rohrenden, deren Flansch in einen Ansatz des Gerätegehäuses einsetzbar und darin durch einen Gewindering in seiner Lage fixierbar ist, **dadurch gekennzeichnet,** daß der Ansatz (2) auf wenigstens einer Mantelseite (4,7) zum seitlichen Einführen des Flansches (5) offen ist und einen nach innen weisenden Kragen (3) aufweist, an dem sich eine durch die seitliche Öffnung (4,7) in den Ansatz einführbare und auf dem Außengewinde des Gewinderings (10) verschraubbare Mutter (11) in Achsrichtung abstützt.

2. Schnellanschluß nach Anspruch 1, **dadurch gekennzeichnet,** daß der Gewindering (10) ungeteilt und an seinem äußeren Ende mit einer Kontur (17) zum Ansetzen eines Drehwerkzeugs versehen ist.

3. Schnellanschluß nach Anspruch 1 oder 2, **dadurch gekennzeichnet,** daß die Innenkontur des Ansatzes (2) und die Außenkontur der Mutter (11) in einer das Mitdrehen der Mutter beim Drehen des Gewinderings (1) verhindernden Weise aneinander angepaßt sind.

4. Schnellanschluß nach Anspruch 3, **dadurch gekennzeichnet,** daß die Außenkontur der Mutter (11) eine Vieleckkontur, vorzugsweise quadratisch ist.

5. Schnellanschluß nach einem der Ansprüche 1 bis 4, **dadurch gekennzeichnet,** daß der Flansch (5) stirnseitig oder mantelseitig angeordnete Dichtelemente (14) aufweist.

6. Schnellanschluß nach einem der Ansprüche 1 bis 4, **dadurch gekennzeichnet,** daß an der Bodenfläche (9) des Ansatzes (2) dem Flansch (5) gegenüberstehende Dichtelemente vorgesehen sind.

7. Schnellanschluß nach Anspruch 5 oder 6, **dadurch gekennzeichnet,** daß als Dichtelement ein O-Ring (14) dient.

8. Schnellanschluß nach Anspruch 7, **dadurch gekennzeichnet,** daß der O-Ring (14) mit einem den Gasdurchlaß abdeckenden Schmutzsieb (15) ein einstückiges, auswechselbares Bauteil bildet.

7210058

FIG.1

FIG.2

## FIG. 3

FIG.4 A

FIG.4 B

11